# EUROPEAN PATENT APPLICATION

(11) **EP 1 867 967 A2**
(43) Date of publication of application: **19.12.2007**
(21) Application number: 07109754.7
(22) Date of filing: 06.06.2007
(51) Int. Cl.: G01H 11/08

(54) **Vibration sensor**

(30) Priority: 06.06.2006 JP 2006157569
(71) Applicant: Fujitsu Media Devices Limited, Yokohama-shi, Kanagawa 222-0033 (JP); Fujitsu Ltd., Kawasaki-shi, Kanagawa 211-8588 (JP)
(72) Inventor: Takahasi, Yuji, Kawasaki-shi, Kanagawa 211-8588 (JP); Nakazawa, Fumihiko, Kawasaki-shi, Kanagawa 211-8588 (JP); Ishikawa, Hiroshi, Kawasaki-shi, Kanagawa 211-8588 (JP); Yachi, Masanori, Yokohama-shi Kanagawa 222-0033 (JP); Yamaji, Takayuki, Yokohama-shi Kanagawa 222-0033 (JP); Ohta, Minoru, Akashi-shi Hyogo 674-0074 (JP)
(74) Representative: Wilding, Frances Ward

(57) **Abstract**

A. vibration sensor includes a vibration body, a drive circuit that vibrates the vibration body, a sense circuit that refers to a reference signal associated with a drive signal for the drive circuit and detects a physical state of the vibration body on the basis of a sense signal related to vibration of the vibration body, and a capacitor provided between the drive circuit and ground. The capacitor has a temperature characteristic of a capacitance value defined so as to compensate for at least a part of the temperature characteristic of a sensitivity of the sense signal to the vibration of the vibration body.

## Description

### BACKGROUND OF THE INVENTION

### 1. Field of the Invention

The present invention relates to vibration sensors, and more particularly, to a vibration sensor having a function of compensating for temperature characteristics of sensitivity.

### 2. Description of the Related Art

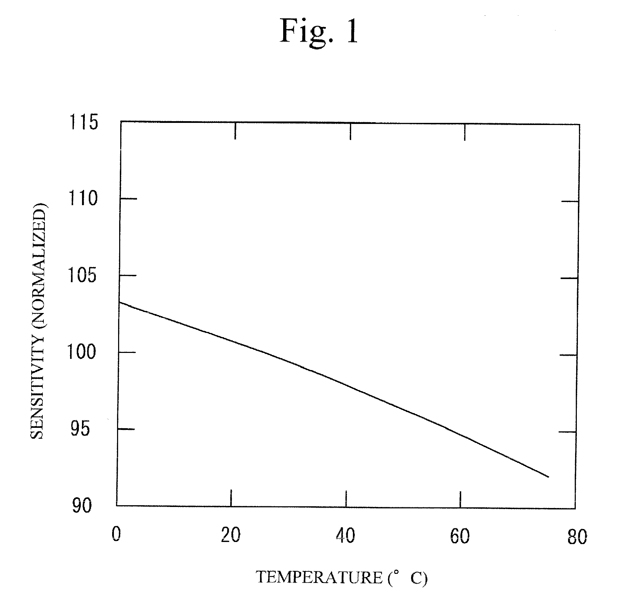

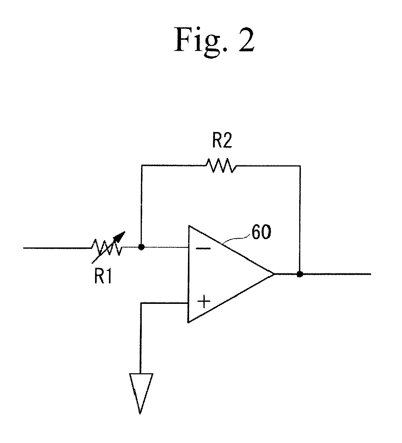

Vibration sensors such as acceleration sensors and angular velocity sensors have a vibration body. Vibrations of vibration body are sensed to thus detect acceleration and angular velocity. For example, the angular velocity sensors are used for car navigation systems and image stabilization in digital cameras. The vibration body of the vibration sensors is formed by a piezoelectric material, which converts vibrations of the vibration body into an electric signal. However, variations in the atmosphere change the sensitivity of the sense signal in converting the mechanical vibration into the electric signal. Fig. 1 is a graph of the sensitivity of an angular velocity sensor as a function of temperature. The horizontal axis of the graph denotes the temperature and the vertical axis denotes the normalized sensitivity. The sensitivity has a negative temperature characteristic. Japanese Patent Application Publication No. 11-148829 (Document 1) discloses a way to compensate for the temperature characteristic of sensitivity, in which a differential amplifier 60 shown in Fig. 2 is connected to the output of a vibration sensor. The circuit shown in Fig. 2 utilizes the temperature characteristics of resistors R1 and R2 for compensating for the temperature characteristic of the sensitivity.

It should be noted that the resistors R1 and R2 disclosed in Document 1 are diffused resistors. However, the diffused resistors may have a difficulty in realizing stable temperature characteristics of resistance in mass production. Further, the diffused resistors designed to have temperature characteristics leads to a situation in which the differential amplifier itself has a temperature characteristic. It is therefore difficult to reliably compensate for the temperature characteristic of the sensitivity.

### SUMMARY OF THE INVENTION

The present invention has been made in view of the above circumstances and provides a vibration sensor having an improved temperature characteristic of sensitivity.

According to an aspect of the present invention, there is provided a vibration sensor including: a vibration body; a drive circuit that vibrates the vibration body; a sense circuit that refers to a reference signal associated with a drive signal for the drive circuit and detects a physical state of the vibration body on the basis of a sense signal related to vibration of the vibration body; and a capacitor provided between the drive circuit and ground, the capacitor having a temperature characteristic of a capacitance value defined so as to compensate for at least a part of the temperature characteristic of a sensitivity of the sense signal to the vibration of the vibration body.

According to another aspect of the present invention, there is provided a vibration sensor including: a vibration body; a drive circuit that vibrates the vibration body; and a sense circuit that refers to a reference signal associated with a drive signal for the drive circuit and detects a physical state of the vibration body on the basis of a sense signal related to vibration of the vibration body, the temperature characteristic of the phase difference between the reference signal and the sense signal compensating for at least a part of the temperature characteristic of a sensitivity of the sense signal to the vibration of the vibration body.

### BRIEF DESCRIPTION OF THE DRAWINGS

Other objects, features and advantages of the present invention will become more apparent from the following detailed description when read in conjunction with the accompanying drawings, in which:
Fig. 1 shows an example of a temperature dependence of the sensitivity of a sense signal to vibration;
Fig. 2 is a circuit diagram that compensates for the temperature dependence of the sensitivity in a conventional way;
Fig. 3 is a block diagram of an angular velocity sensor in accordance with a first embodiment of the present invention;
Figs. 4A and 4B show electrode patterns on a vibration body;
Figs. 5A and 5B show vibration modes of the vibration body;
Fig. 6 is a waveform diagram of signals in a drive circuit shown in Fig. 2;
Fig. 7 shows an operation of a sense circuit shown in Fig. 2;
Fig. 8 shows an output signal observed when the phase of the sense signal is varied;
Fig. 9 is a graph of a sensitivity of sense signal as a function of a phase difference;
Fig. 10 schematically shows waveforms of the sense signal observed when the capacitance value of the capacitor is changed;
Fig. 11 is a graph of an electrostatic capacitance variation ratio as a function of temperature for different capacitors;
Fig. 12 shows an output signal observed when the phase of the sense signal is varied;
Fig. 13A is a circuit diagram of a phase shifter; and
Fig. 13B is a graph of a phase variation as a function of frequency for different temperatures.

### DESCRIPTION OF THE PREFERRED EMBODIMENTS

A description will now be given of embodiments of the present invention with reference to the accompanying drawings.

### [First Embodiment]

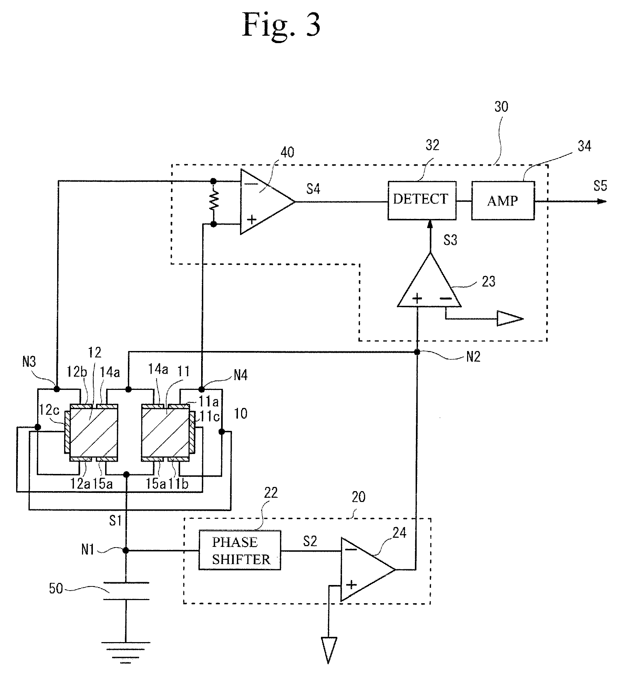

A first embodiment is an exemplary angular velocity sensor having a tuning-fork type vibrator as a vibration body. Fig. 3 is a block diagram of a sensing system in accordance with the first embodiment. The sensing system includes a vibration body 10 (tuning-fork type vibrator), a drive circuit 20 and a sense circuit 30. Drive electrodes 15a of the vibration body 10 are grounded via a capacitor 50. The drive circuit 20 is connected to a node N1 between the drive electrodes 15a and the capacitor 50. The capacitor 50 is connected between the drive circuit 20 and ground. The drive circuit 20 includes a phase shifter 22, and a phase inversion amplifier 24. The phase shifter 22 delays the phase by 90 degrees to change the phase of a drive signal S1 and produce a resultant signal S2. The phase inversion amplifier 24 inverts the phase of the output signal S2. The output signal of the drive circuit 20 is applied to drive electrodes 14a of the vibration body 10. Sense electrodes 12a, 12b and 11c are connected to each other at a node N3, and sense electrodes 11a, 11b and 12c are connected in common at a node N4. The nodes N3 and N4 are connected to inverting and non-inverting input terminals of a differential amplifier circuit 40 of the sense circuit 30, respectively. The differential amplifier 40 outputs a sense signal S4, which is applied to a detector 32. The output signal of the phase inversion amplifier 24 is converted into a rectangular wave signal by a comparator 23 of the sense circuit 30. The rectangular wave signal is then applied to the detector 32 as a reference signal S3. The sense circuit 30 includes the differential amplifier circuit 40, the comparator 23, the detector 32 and an amplifier 34, and produces an output signal S5 from the sense signal derived from the reference signal S3 and the two output signals from the vibration body 10.

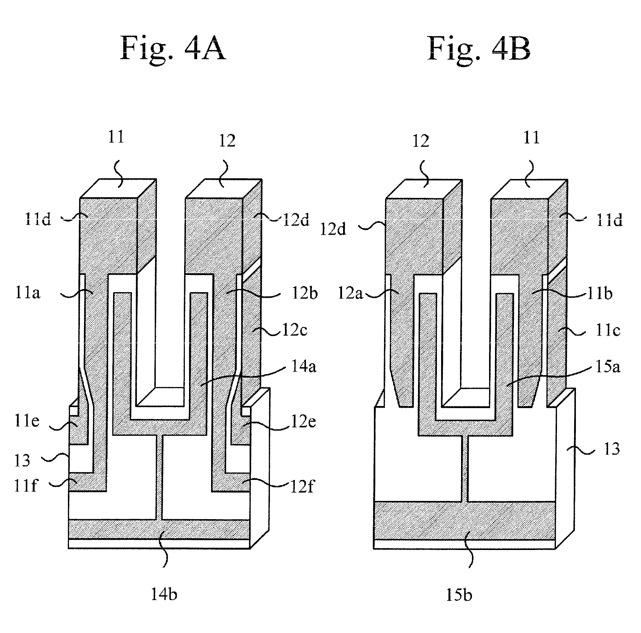

Figs. 4A and 4B show electrode patterns of the vibration body 10 formed by a tuning-fork type vibrator. The vibration body 10 is formed of a piezoelectric material such as LiNbO₃ (lithium niobate: LN) or LiTaO₃. (lithium tantalate: LT). When LN or LT is used, a 130° to 140° Y-cut plate may be used to obtain a high k23 electromechanical coupling coefficient. The electrodes formed on the vibration body 10 may be a metal film of Au, Al or Cu.

Fig. 4A shows the front side of the vibration body 10, and Fig. 4B shows the back side thereof. An arm 11 is provided with the sense electrodes 11a, 11b and 11c. The sense electrodes 11a and 11b are connected by an electrode 11d. An extraction electrode 11f is provided in the sense electrode 11a. The electrode 11c is connected to an extraction electrode 11e. Similarly, an arm 12 is provided with sense electrodes 12a, 12b and 12c. The sense electrodes 12a and 12b are connected by an electrode 12d. An extraction electrode 12f is provided in the electrode 12a. The electrode 12c is connected to an extraction electrode 12e. The drive electrodes 14a are provided on the front side of the vibration body 10, and are connected to an extraction electrode 14b. Similarly, the drive electrodes 15a are provided on the back side of the vibration body 10, and are connected to an extraction electrode 15b.

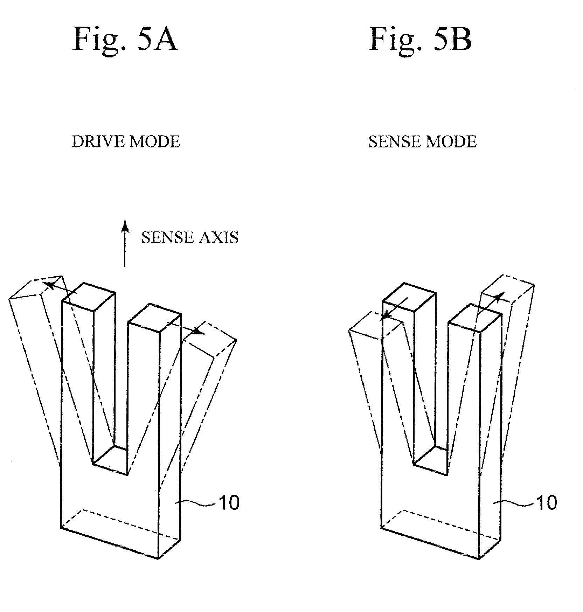

Figs. 5A and 5B show a drive mode and a sense mode, respectively. Referring to Fig. 5A, a drive signal is applied between the drive electrodes 14a and 15a to cause a vibration mode in which the arms 11 and 12 move close to and away from each other in turn. The vibration shown in Fig. 5A is parallel to a plane in which the arms 11 and 12 are included. An angular velocity applied to the sensing axis produces Coriolis force and causes another vibration mode shown in Fig. 5B in which the arms 11 and 12 move back and forth. This vibration is a twist vibration perpendicular to the plane on which the arms are vibrated. The differential amplifier 40 detects the difference in potential between the nodes N3 and N4 and outputs it as the sense signal S4. In this manner, the mechanical vibration of the vibration body 10 can be sensed in the form of electric signal. The potential difference between the nodes N3 and N4 is maximized when the amplitudes of the arms 11 and 12 are at maximum in Fig. 5A. Thus, it is preferable to detect the phase difference between the nodes N3 and N4 in synchronism with the time at which the arms 11 and 12 have the maximum amplitude. This simultaneous detection enables efficient sensing and the highest S/N ratio.

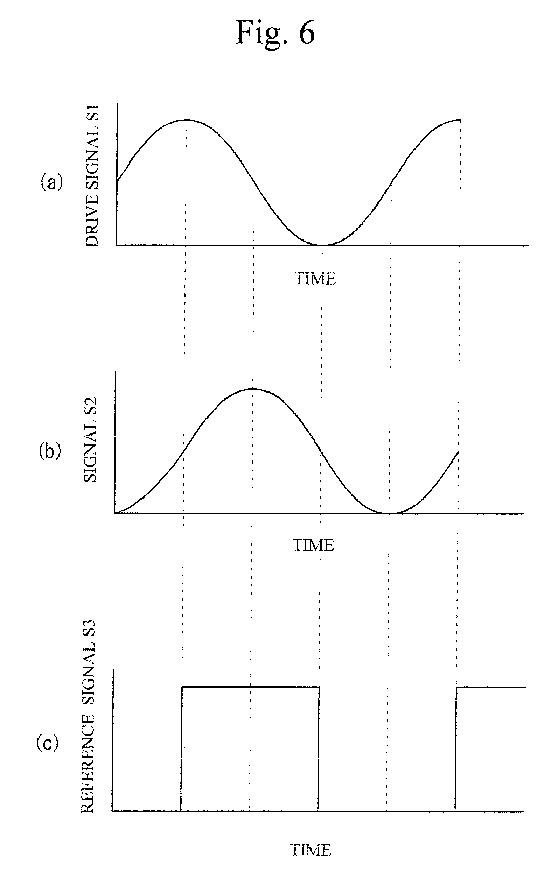

Fig. 6 is a timing chart that shows the waveforms of signals shown in Fig. 3 when the phase difference between the nodes N3 and N4 is synchronized with the time when the maximum amplitude of the arms 11 and 12 are available. More particularly, part (a) of Fig. 6 shows the drive signal S1 output via the drive electrode 15a of the vibration body 10. The amplitudes of the arms 11 and 12 are maximized at a time when the phase is delayed by 90 degrees from the maximum amplitude of the drive signal S1. Thus, the signal of the drive signal S1 is delayed by 90 degrees the phase shifter 22 so that the resultant signal S2 shown in part (b) of Fig. 6 can be produced. The phase inversion amplifier 24 inverts the phase of the input signal S2 and outputs the signal thus amplified. The comparator 23 outputs the rectangular wave signal as shown in part (c) of Fig. 6. The output signal of the comparator 23 is applied to the detector 32 as the reference signal S3. The output signal of the phase inversion amplifier 24 is applied to the drive electrodes 14a of the vibration body 10. There is a phase delay of 90 degrees between the drive electrodes 14a and 15a. A phase rotation of 360 degrees is caused in the loop from the vibration body 10 to the vibration body via the drive circuit 20. Thus, the drive signal is oscillated, so that the vibration body 10 can be vibrated. The drive circuit 20 mechanically vibrates the vibration body 10.

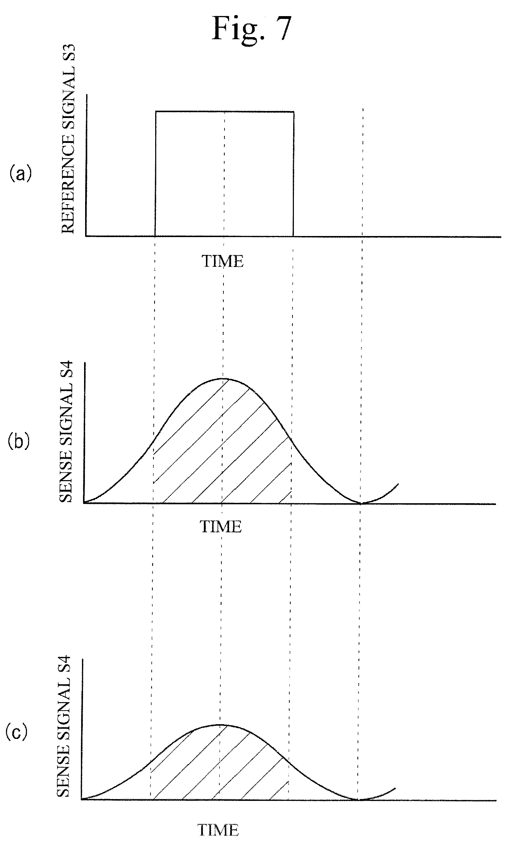

Fig. 7 shows an operation of the sense circuit 30. When the vibration body is vibrated due to Coriolis force as shown in part (b) of Fig. 7, a potential difference between the nodes N3 and N4 of the vibration body 10 develops. The differential amplifier 40 detects the potential difference between the nodes N3 and N4 as the sense signal S4, which is then applied to the detector 32. Part (a) of Fig. 7 shows the reference signal S3 applied to the detector 32 of the sense circuit 30, and part (b) shows the sense signal S4. The reference signal S3 and the sense signal are substantially synchronized with each other. The detector 32 cumulates the sense signal S4 during the time when the reference signal S3 is at the high level. That is, the detector 32 outputs a signal corresponding to the area of the hatched portion shown in part (b) of Fig. 7. The amplifier 34 amplifies the output signal of the detector 32, and the resultant amplified signal as the output signal S5. As shown in part (c) of Fig. 7, when the amplitude of the sense signal S4 becomes small, the output signal S5 becomes small. In contrast, when the amplitude of the sense signal S4 becomes large, the output signal S5 becomes large. As described above, the sense circuit 30 refers to the reference signal S3 related to the drive signal S1 of the drive circuit 20, and detects the amplitude of vibration (physical state) of the vibration body 10 on the basis of the sense signal S4 that reflects the mechanical vibration of the vibration body 10. That is, the sense circuit 30 uses the reference signal S3 synchronized with the sense signal S4, and outputs the output signal S5 related to the amplitude of the sense signal S4.

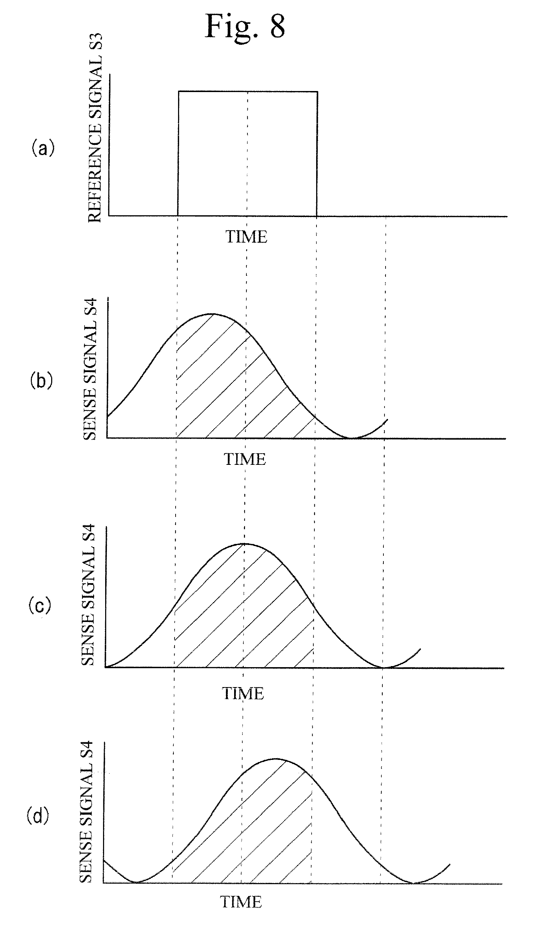

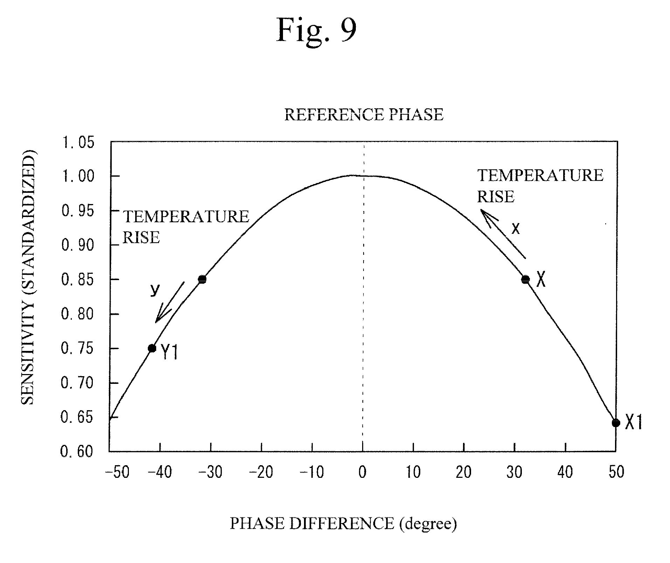

As shown in parts (a) through (d) of Fig. 8, the output signal S5 is varied due to the phase difference between the reference signal S3 and the sense signal S4. Part (a) of Fig. 8 shows the reference signal S3. Parts (b) through (d) of Fig. 8 respectively show different phases of the sense signal S4. The output signal S5 is maximized when the sense signal S4 has the phase shown in part (c) of Fig. 8. The phase difference between the reference signal S3 and the sense signal S4 obtained at that time is defined as a reference phase difference. When the reference signal S3 has a rectangular wave and the sense signal S4 has a triangular wave, the reference phase difference is available when the phase difference is zero. As shown in parts (b) and (d), when the phase difference between the reference signal S3 and the sense signal S4 deviates from the reference phase difference, the area of the sense signal synchronized with the reference signal S3 (the hatched portion) becomes smaller than the area shown in part (c) of Fig. 8. That is, the output signal S5 is decreased. Fig. 9 shows the output sensitivity as a function of the phase difference between the reference signal S3 and the sense signal S4, in which the output sensitivity is the sensitivity of the output signal S5 to the sense signal S4. The output sensitivity is maximized for the reference phase difference, and is lowered when the phase difference deviates from the reference phase difference. In the graph of Fig. 9, the plus sign of the phase difference denotes that the sense signal S4 leads to the reference signal S3, and the minus sign thereof denotes that the sense signal S4 lags behind the reference signal S3.

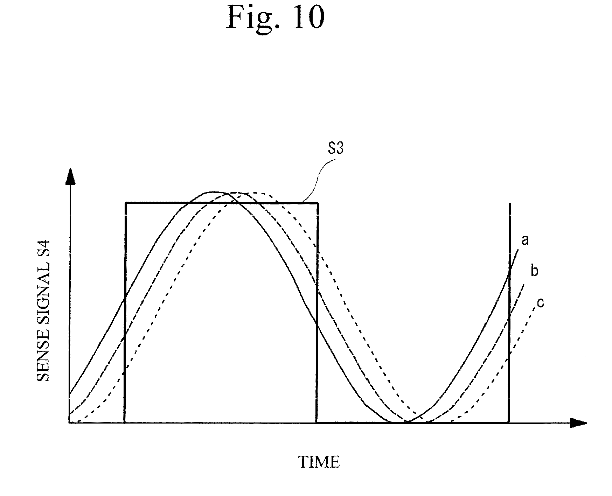

The inventors found out that, when the capacitance value of the capacitor 50 shown in Fig. 3 is changed, the phase of the sense signal S4 is changed with respect to the reference signal S3, as shown in Fig. 10, in which the capacitance values are reduced in the order of a, b and c. As the capacitance value of the capacitor 50 is reduced, the phase of the sense signal S4 is delayed. It may be considered that the phase of the mechanical vibration depends on the capacitance value of the capacitor 50.

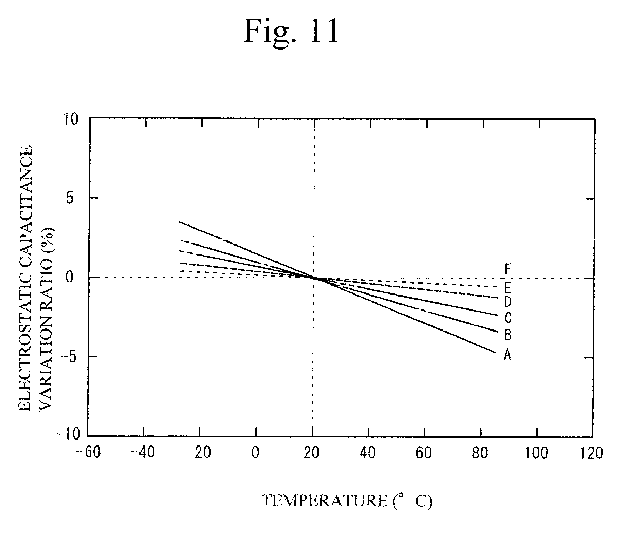

Fig. 11 shows temperature characteristics of the electrostatic capacitance values of different types of capacitors. The capacitors have negative temperature characteristics. Different types of capacitors A through F have different temperature coefficients. A desired temperature characteristic can be selected by selecting a corresponding one of the types of capacitors A through F.

When the capacitance value of the capacitor 50 has a negative temperature characteristic, the capacitor 50 has a reduced capacitance value as the temperature rises. Thus, the phase of the sense signal S4 is delayed, as shown in Fig. 10. Thus, the phase difference moves towards the minus direction. The phase difference between the reference signal S3 and the sense signal S4 is set greater than the reference phase difference by selecting the capacitance value of the capacitor 50, as indicated by an arrow X shown in Fig. 9. Thus, the output sensitivity can be increased when the temperature rises, as indicated by x in Fig. 9. For example, in a case where the output sensitivity is a cosine function of the phase difference, when the phase difference is X1 of 50° and capacitor A (having a temperature characteristic of -750 ppm/°C) shown in Fig. 11 is used, the output sensitivity is caused to have a temperature characteristic of 945 ppm/°C. By way of another example, when the phase difference between the reference signal S3 and the sense signal S4 is set smaller than the reference phase difference, as indicated by Y, the output sensitivity is decrease as the temperature rises, as indicated by arrow y shown in Fig. 9. For example, when the phase difference is Y1 of -40° and capacitor A shown in Fig. 11 is used, the output sensitivity is caused to have a temperature characteristic of -905 ppm/°C.

As described above, it is possible to compensate for the temperature characteristic of the sensitivity of the sense signal responsive to the mechanical vibration by the temperature characteristic of the output sensitivity. That is, when the sensitivity of the sense signal has a negative temperature characteristic, the phase difference is set closer to the reference phase difference as the atmosphere temperature rises. In contrast, when the sensitivity of the sense signal has a positive temperature characteristic, the phase difference is set further away from the reference phase difference as the atmosphere temperature rises. It is thus possible to compensate for the temperature variations in sensitivity of the sense signal by the temperature characteristics of the output sensitivity.

As described above, according to the first embodiment, the temperature characteristics of the phase difference between the reference signal S3 and the sense signal S4 is set so as to compensate for the temperature characteristics of the sensitivity of the sense signal responsive to vibration of the vibration body 10. With this structure, it is no longer necessary to the resistors as described in Document 1 mentioned before, but the temperature characteristic of the sensitivity of the sense signal can be reliably compensated for. The temperature characteristic of the phase difference may be regulated well by compensating for at least a part of the temperature characteristic of the sensitivity of the sense signal. That is, the temperature characteristic of the sensitivity of the sense signal can be compensated for when the temperature characteristic of the output signal S5 is less than the temperature characteristic of the sensitivity of the sense signal. The temperature characteristic of the capacitance value of the capacitor 50 is set so as to compensate for at least a part of the temperature characteristic of the sensitivity of the sense signal. In other words, the temperature characteristic of the phase difference is defined by the temperature characteristic of the capacitance value of the capacitor 50. As shown in Fig. 11, the capacitances having different temperature characteristics are easily available. It is thus possible to easily compensate for the temperature characteristic of the sensitivity of the sense signal.

The capacitor 50 may be detachable. It is possible to select a capacitor having a temperature coefficient of the capacitance value suitable for the sensitivity of the embedded vibration body 10 and install the selected capacitor in the vibration sensor as the capacitor 50. The temperature characteristic of the sensitivity of the sense signal can be compensated for more precisely.

### [Second Embodiments]

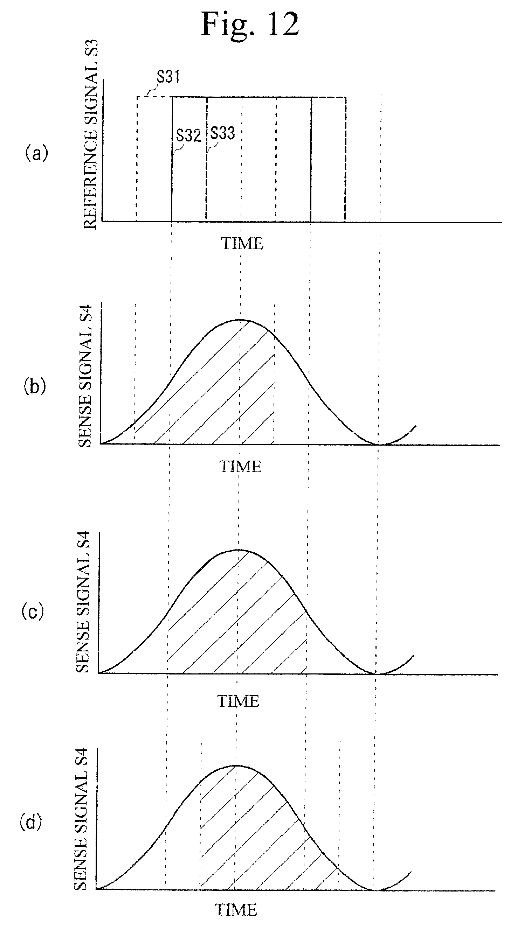

A second embodiment is an exemplary vibration sensor in which the sensitivity of the sense signal can be compensated for using the temperature characteristic of the phase of the aforementioned phase shifter 22. Parts (a) through (d) of Fig. 12 show a case where the phase of the reference signal S3 changes while the phase of the sense signal S4 does not change. Part (a) of Fig. 12 shows the reference signal S3. When the reference signal S3 has a phase S32, the reference signal S3 is in phase with the sense signal S4, and the output signal S5 is the maximum as shown in part (c) of Fig. 12. The phase different at that time is the reference phase difference. When the reference signal S3 has a phase S31, the phase of the reference signal S3 leads to the sense signal S4. When the reference signal S3 has a phase S33, the phase of the reference signal S3 lags behind the sense signal S4. Thus, when the reference signal S3 has the phase S31 or S33, the output signal S5 is reduced as indicated by parts (b) or (d) of Fig. 12. As described above, the output sensitivity can be varied by changing the phase of the reference signal S3 rather than the changing the phase of the sense signal S4 as shown in Fig. 8.

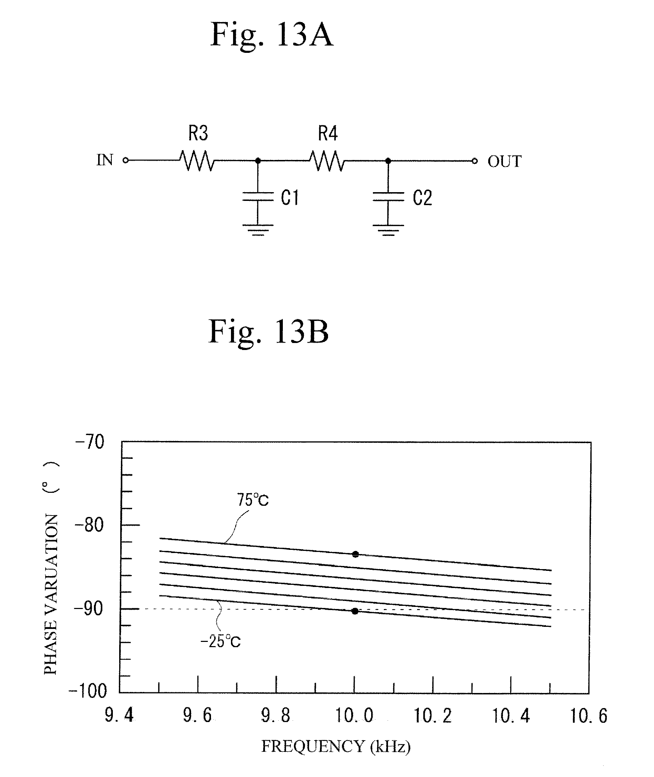

Figs. 13A and 13B show a method for causing the reference signal S3 to have a temperature dependence. Fig. 13A shows a phase shifter in which resistors R3 and R4 are connected in series between an input terminal IN and an output terminal OUT, and capacitors C1 and C2 are provided in parallel. The inventors calculated the phase characteristic, assuming that the resistors R3 and R4 have a resistance value of 15 kΩ and a temperature coefficient of 1400 ppm/^{o}C, and the capacitors C1 and C2 have a capacitance value of 1 nF and a temperature coefficient of 0. Fig. 13B shows results of calculation in which the vertical axis denotes phase variation (°) and the horizontal axis denotes frequency (kHz). For a frequency of 10 kHz, the phase variation is - 90° at a temperature of -25 °C, and is -84° at a temperature of 75 °C. For example, in a case where the output sensitivity is a cosine function of the phase difference, when the phase difference is X1 of 50° and the phase sifter shown in Fig. 13A is used, the output sensitivity is caused to have a temperature characteristic of 1611 ppm/°C. By way of another example, when the phase difference between the reference signal S3 and the sense signal S4 is set smaller than the reference phase difference, as indicated by Y, the output sensitivity is decrease as the temperature rises, as indicated by arrow y shown in Fig. 9. For example, when the phase difference is Y1 of -40° and the phase shifter shown in Fig. 13A is used, the output sensitivity is caused to have a temperature characteristic of -1712 ppm/°C.

As described above, the temperature characteristic of the phase difference can be defined by the temperature characteristic of the phase of the phase shifter 22. It is thus possible to compensate for the temperature characteristic of the sensitivity of the sense signal by using the temperature characteristic of the phase difference. The temperature characteristic of the phase of the phase shifter 22 of the second embodiment may be added to the first embodiment in which the temperature characteristic of the phase difference is compensated for by the temperature characteristic of the capacitance value of the capacitor 50. Thus, even if the sensitivity of the sense signal has a great temperature characteristic, it can be compensated for by utilizing the temperature characteristics of both the capacitor 50 and the phase shifter 22. Further, the temperature characteristic of the phase difference between the reference signal S3 and the sense signal S4 may be defined by a method other than the first and second embodiments.

The first and second embodiments are designed to detect the amplitude of vibration as a physical state of the vibration body 10. The present invention may be applied to a sensor having variation in capacitance such as an electrostatic capacitance sensor. The present invention includes not only the above-mentioned angular velocity sensor but also an acceleration sensor. The vibration body 10 is not limited to the tuning-fork type vibrator but includes other types of vibrators such as a single-piece sensor.

The present invention is not limited to the specifically disclosed embodiments, but include other embodiments and variations without departing from the scope of the present invention.

The present application is based on Japanese Patent Application No. 2006-157569 filed June 6, 2006, the entire disclosure of which is hereby incorporated by reference.

## Claims

1. A vibration sensor comprising:
a vibration body;
a drive circuit that vibrates the vibration body;
a sense circuit that refers to a reference signal associated with a drive signal for the drive circuit and detects a physical state of the vibration body on the basis of a sense signal related to vibration of the vibration body; and
a capacitor provided between the drive circuit and ground,
the capacitor having a temperature characteristic of a capacitance value defined so as to compensate for at least a part of the temperature characteristic of a sensitivity of the sense signal to the vibration of the vibration body.

2. The vibration sensor as claimed in claim 1, wherein the capacitor is detachable.

3. The vibration sensor as claimed in claim 1, wherein the physical state of the vibration body includes vibration of the vibration body.

4. A vibration sensor comprising:
a vibration body;
a drive circuit that vibrates the vibration body; and
a sense circuit that refers to a reference signal associated with a drive signal for the drive circuit and detects a physical state of the vibration body on the basis of a sense signal related to vibration of the vibration body,
the temperature characteristic of the phase difference between the reference signal and the sense signal compensating for at least a part of the temperature characteristic of a sensitivity of the sense signal to the vibration of the vibration body.

5. The vibration sensor as claimed in claim 4, further comprising a capacitor connected between the drive circuit and ground,
the temperature characteristic of the phase difference being defined by a temperature characteristic of a capacitance value of the capacitor.

6. The vibration sensor as claimed in claim 4, further comprising a phase shifter for shifting a phase of the drive signal,
the temperature characteristic of the phase difference being defined by a temperature characteristic of a phase of the phase shifter.

7. The vibration sensor as claimed in claim 5, further comprising a phase shifter for shifting a phase of the drive signal,
the temperature characteristic of the phase difference being defined by a temperature characteristic of a phase of the phase shifter in addition to the temperature characteristic of the capacitance value of the capacitor.

8. The vibration sensor as claimed in claim 4, wherein the capacitor is detachable.

9. The vibration sensor as claimed in claim 4, wherein:
the detection circuit has an output signal that is maximized when the phase difference between the reference signal and the sense signal is a reference phase difference;
the sensitivity of the sense signal has a negative temperature characteristic; and
the phase difference becoming closer to the reference phase difference as the temperature rises.

10. The vibration sensor as claimed in claim 4. wherein:
the detection circuit has an output signal that is maximized when the phase difference between the reference signal and the sense signal is a reference phase difference;
the sensitivity of the sense signal has a positive temperature characteristic; and
the phase difference becoming further away from the reference phase difference as the temperature rises.

11. The vibration sensor as claimed in claim 1, wherein the physical state of the vibration body includes vibration of the vibration body.
